# EUROPEAN PATENT APPLICATION

(11) **EP 4 602 982 A1**
(43) Date of publication of application: **20.08.2025**
(21) Application number: 23876866.7
(22) Date of filing: 06.09.2023
(51) Int. Cl.: A47J 27/12, A47J 27/00, A47J 36/32

(54) **MULTIFUNCTIONAL COOKING UTENSIL**

(30) Priority: 14.10.2022 CN 202211259729
(71) Applicant: Zhejiang Shaoxing Supor Domestic Electrical Appliance Co., Ltd, Shaoxing, Zhejiang 312017 (CN)
(72) Inventor: ZHAO, Jun, Shaoxing, Zhejiang 312017 (CN); WEI, Shourong, Shaoxing, Zhejiang 312017 (CN)
(74) Representative: LLR
(86) International application number: PCT/IB2023/058792
(87) International publication number: WO 2024/079547

(57) **Abstract**

A multifunctional cooking utensil (10), comprising: an inner pot (121) removably arranged in a hollow chamber of a housing, a cover assembly (11) capable of covering the housing and defining a cooking space together with the inner pot (121), a hot air assembly provided in the cover assembly (11) and comprising a fan (113) and a first heating element (114), a second heating element (124) provided in a base of the housing, a first timer, and a controller (131). The cooking utensil (10) can operate in a plurality of modes, and the controller (131) is configured to execute the following steps: receiving an initial user input for initiating a combined cooking mode, comprising a conduction cooking mode duration T1s and a convection cooking mode duration T2s (S1); starting a conduction cooking mode and the first timer (S2); when a time T1 recorded by the first timer is equal to T1s, switching to a convection cooking mode and starting a second timer (S3); and when a timer T2 recorded by the second timer is equal to T2s, ending cooking (S4).

## Description

### Technical Field

The present application relates to the field of kitchen appliances, and in particular, to a multifunctional cooking utensil.

### Background

At present, in order to facilitate users and reduce space occupied in a kitchen, multifunctional cooking utensils have appeared on the market, especially multifunctional cooking utensils that combine convection cooking functions (such as air frying/baking) and conduction cooking functions (such as steaming and pressure cooking). Such utensils are very popular and favored by consumers. When preparing meat, it is generally necessary to steam it first and then bake it, so that the meat is crispy on the outside and tender on the inside with a better taste. Multifunctional cooking utensils that can work in a combined cooking mode (such as steaming first and then baking mode, referred to as steam baking mode) can easily realize fully automatic cooking of meat typed food: users only need to put prepared food ingredients into the utensil, set corresponding parameters according to personal preferences and start the utensil. The food can be enjoyed after the cooking is completed, without the need for human intervention during the process.

The above-mentioned automatic cooking process involves automatic switching from a conduction cooking mode to a convection cooking mode. A currently known practice is that a controller of a multifunctional cooking utensil determines whether to switch between a conduction cooking mode and a convection cooking mode based on whether the temperature in a cooking space detected by at least one temperature sensor has reached a predetermined threshold, such as the cooking system disclosed in Chinese patent CN113455920A. However, since fat in meat typed food will go to the bottom of a pot when heated, the temperature of the bottom of the pot will rise. When the controller receives a high temperature signal, it will misjudge that dry burning has occurred and switch a conduction cooking mode to a convection cooking mode prematurely, which will undoubtedly affect the taste of the finished food.

### Summary

An objective of the present application is to provide a multifunctional cooking utensil capable of implementing an improved control method.

To this end, the present application provides a multifunctional cooking utensil comprising: a housing defining a hollow chamber; an inner pot removably arranged in the hollow chamber and comprising a side wall and a bottom wall; a cover assembly configured to cover the housing and defining a cooking space together with the inner pot; a hot air assembly arranged in the cover assembly and comprising a fan and a first heating element; a second heating element arranged in a base of the housing and used for heating the bottom wall of the inner pot. The multifunctional cooking utensil further comprises a first timer and a controller configured to enable the multifunctional cooking utensil to operate in a plurality of modes including a conduction cooking mode in which the second heating element operates while the first heating element and the fan do not operate, a convection cooking mode in which the first heating element and the fan operate while the second heating element does not operate, and a combined cooking mode. The controller is configured to execute the following steps:
S1: receiving an initial user input for initiating the combined cooking mode, the initial user input comprising a conduction cooking mode duration T1s and a convection cooking mode duration T2s;
S2: starting the convection cooking mode and the first timer;
S3: when a time T1 recorded by the first timer is equal to T1s, switching to the convection cooking mode and starting a second timer;
S4: when a time T2 recorded by the second timer is equal to T2s, ending cooking.

According to some embodiments, step S4 comprises:
S41: when the time T2 recorded by the second timer is equal to T2s-t2, causing the first heating element to stop operating while letting the fan continue to operate;
S42: when the time T2 recorded by the second timer is equal to T2s, causing the fan to stop operating as well.

According to some embodiments, the multifunctional cooking utensil further comprises: a first temperature sensor arranged in the cover assembly and configured to measure the temperature of the top of the cooking space in real time during both the conduction cooking mode and the convection cooking mode and to send the temperature to the controller in real time; and a second temperature sensor conductively connected to the bottom wall of the inner pot and configured to measure the temperature of the bottom wall of the inner pot in real time during both the conduction cooking mode and the convection cooking mode and to send the temperature to the controller in real time.

According to some embodiments, the multifunctional cooking utensil further comprises a human-machine interaction panel signal-connected to the controller, a user providing the initial user input by selecting a preset recipe on the human-machine interaction panel, the preset recipe being associated with corresponding preset values of T1s and T2s.

According to some embodiments, the multifunctional cooking utensil further comprises a human-machine interaction panel signal-connected to the controller, a user providing the initial user input by manually inputting values of T1s and T2s on the human-machine interaction panel.

According to some embodiments, the first temperature sensor and the second temperature sensor are both thermistor sensors, preferably negative temperature coefficient sensors.

According to some embodiments, the first temperature sensor has a temperature measuring range of -40°C to 300°C, and the second temperature sensor has a temperature measuring range of -50°C to 350°C.

According to some embodiments, at least a portion of the first temperature sensor is exposed in the cooking space and away from the first heating element, and the second temperature sensor is located at or near a center of the bottom wall of the inner pot.

According to some embodiments, step S2 comprises the following step:
S21: causing the second heating element to operate at full power when starting the conduction cooking mode; and causing the second heating element to stop operating and activating a water shortage alarm device and a third timer when the time T1 recorded by the first timer is less than or equal to a first time threshold, if the temperature value TopTemp of the top of the cooking space received from the first temperature sensor is lower than a first temperature threshold and the temperature value BotTemp of the bottom wall of the inner pot received from the second temperature sensor is higher than a second temperature threshold.

According to some embodiments, step S2 further comprises the following step:
S22: causing the second heating element to operate at full power when starting the conduction cooking mode; and letting the second heating element continue to operate at full power and starting a fourth timer when the time T1 recorded by the first timer is less than or equal to the first time threshold, if the temperature value TopTemp of the top of the cooking space received from the first temperature sensor is higher than the first temperature threshold and the temperature value BotTemp of the bottom wall of the inner pot received from the second temperature sensor is lower than the second temperature threshold and higher than a third temperature threshold.

According to some embodiments, step S2 further comprises the following step:
S23: causing the second heating element to operate at full power when starting the conduction cooking mode; causing the second heating element to alternate between operating at full power and operating at a second power, which is lower than the full power, according to a first cycle, when the time T1 recorded by the first timer is greater than a first time threshold, if the temperature value TopTemp of the top of the cooking space received from the first temperature sensor is lower than the first temperature threshold and the temperature value BotTemp of the bottom wall of the inner pot received from the second temperature sensor is lower than the second temperature threshold and higher than a third temperature threshold; and starting a fourth timer when TopTemp is higher than the first temperature threshold.

According to some embodiments, after step S21, the following steps are further included:
S211: if the controller determines that a user has added water and a time T3 recorded by the third timer is less than or equal to a third time threshold, repeating steps S2, S3 and S4;
S212: if the controller determines that a user has not added water and the time T3 recorded by the third timer is greater than the third time threshold, causing the second heating element to operate intermittently at the second power, which is lower than the full power, so that the temperature value BotTemp of the bottom wall of the inner pot is maintained around the second temperature threshold until the time T1 recorded by the first timer is equal to T1s.

According to some embodiments, after step S22 or S23, the following steps are further included:
S24: if the temperature value BotTemp of the bottom wall of the inner pot received from the second temperature sensor is lower than the second temperature threshold, causing the second heating element to alternate between operating at full power and operating at the second power according to a second cycle;
S25: if the temperature value BotTemp of the bottom wall of the inner pot received from the second temperature sensor is higher than the second temperature threshold and lower than a fourth temperature threshold, causing the second heating element to operate at the second power;
S26: if the temperature value BotTemp of the bottom wall of the inner pot received from the second temperature sensor is higher than the fourth temperature threshold, causing the second heating element to stop operating and reading the time recorded by the fourth timer.

According to some embodiments, after step S26, the following steps are further included:
S261: if the time T4 recorded by the fourth timer is greater than or equal to a fourth time threshold, when the bottom wall of the inner pot cools down to a temperature value BotTemp lower than the fourth temperature threshold, causing the second heating element to operate at a third power, which is lower than the second power;
S262: if the time T4 recorded by the fourth timer is less than the fourth time threshold, when the bottom wall of the inner pot cools down to a temperature value BotTemp lower than the fourth temperature threshold, causing the second heating element to operate at a fourth power, which is lower than the third power.

According to some embodiments, the controller is configured to:
in the convection cooking mode, cause the first heating element to operate intermittently periodically, that is, to immediately start to operate when the temperature value TopTemp of the top of the cooking space received from the first temperature sensor drops below a first temperature control threshold, and to immediately stop operating when TopTemp rises above a second temperature control threshold.

According to some embodiments, the controller is configured to:
in the convection cooking mode, when the temperature value BotTemp of the bottom wall of the inner pot received from the second temperature sensor is greater than a safety temperature threshold, cause the first heating element to stop operating.

It should be understood that the above general description and the following detailed description are exemplary and explanatory only and cannot limit the present invention. Other features, objectives and advantages of the present invention will become apparent from the specification, accompanying drawings and claims.

### Brief description of drawings

In order to more clearly illustrate the technical solutions in the embodiments of the present application, the following briefly introduces the drawings required for use in the description of the embodiments. It can be easily understood by those skilled in the art that these drawings are only for illustrative purposes and are not intended to limit the scope of protection of the present invention. For illustrative purposes, these drawings may not be drawn completely to scale.
Figure 1 is an overall schematic view of a multifunctional cooking utensil according to embodiments of the present application.
Figure 2 is a schematic cross-sectional view of a multifunctional cooking utensil according to embodiments of the present application.
Figure 3 is a schematic cross-sectional view of a multifunctional cooking utensil according to embodiments of the present application, wherein a food support is placed in the utensil.
Figure 4 is a schematic bottom view of a cover assembly of a multifunctional cooking utensil according to embodiments of the present application.
Figure 5 is a schematic top view of a utensil body of a multifunctional cooking utensil according to embodiments of the present application.
Figure 6 is an overall control logic diagram of a multifunctional cooking utensil according to embodiments of the present application in a steam baking mode.
Figure 7 is a control logic diagram for conduction heating of a multifunctional cooking utensil according to embodiments of the present application in a steam baking mode.
Figure 8 shows temperature curves of the first temperature sensor and the second temperature sensor when no water has been added to the inner pot according to embodiments of the present application.
Figure 9 shows temperature curves of the first temperature sensor and the second temperature sensor when an appropriate amount of water has been added to the inner pot according to embodiments of the present application.
Figure 10 shows temperature curves of the first temperature sensor and the second temperature sensor when an excessive amount of water has been added to the inner pot according to embodiments of the present application.

### List of reference numerals:

10: multifunctional cooking utensil; 11: cover assembly; 12: utensil body; 13: control panel; 111: electric motor; 112: first temperature sensor; 113: fan; 114: first heating element; 121: inner pot; 122: second temperature sensor; 123: stirring blade base; 124: second heating element; 14: food support; 141: top layer of the food support; 142: bottom layer of the food support; 143: space below the food support.

### Detailed description of the embodiments

Exemplary modes of realization will be described in detail herein, examples of which are shown in the accompanying drawings. When the following description refers to the drawings, the same numbers in different drawings represent the same or similar elements unless otherwise indicated. The modes of realization described in the following exemplary modes of realization do not represent all modes of realization consistent with the present application. Instead, they are merely examples of means, systems, devices, and methods consistent with some aspects of the present application as detailed in the appended claims.

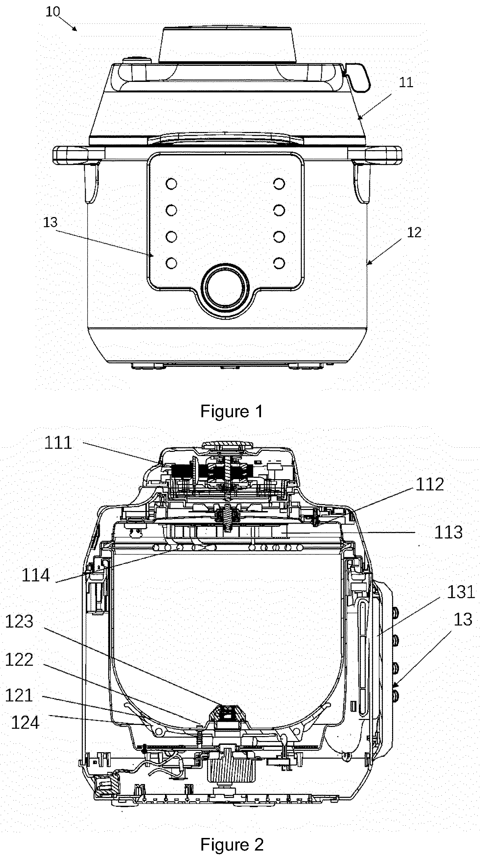

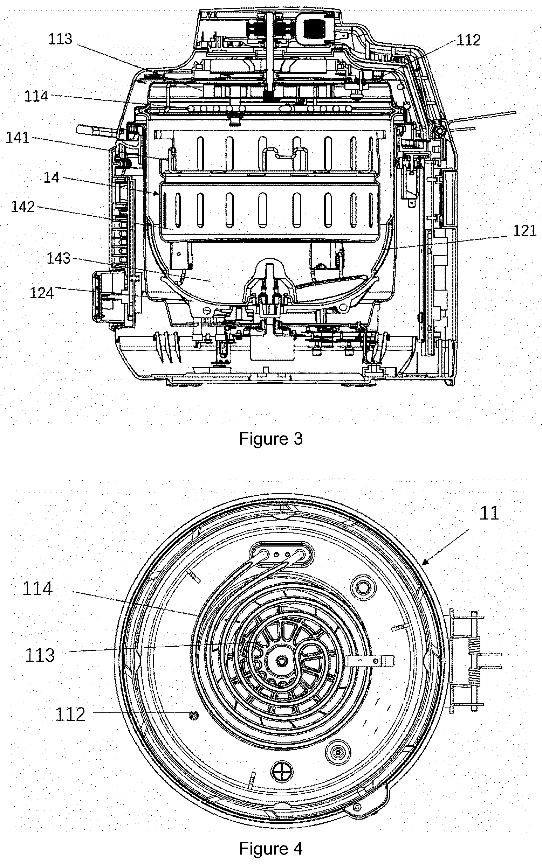

Figures 1 to 3 respectively show, as a whole, a multifunctional cooking utensil 10 according to embodiments of the present application in different views. The cooking utensil comprises a utensil body 12 and a cover assembly 11 capable of sealingly covering the utensil body 12. As best shown in Figures 2 and 3, the utensil body 12 comprises a housing defining a hollow chamber, an inner pot 121 removably arranged in the hollow chamber for accommodating food, and other conventional structures, which will not be described in detail herein. The inner pot 121 may optionally be further provided with a stirring blade base 123. After a stirring blade is mounted thereon, operations such as stirring and blending can be performed on food in the inner pot. When the cover assembly 11 closes the housing, it defines a cooking space together with the inner pot 121. A hot air assembly is provided in the cover assembly 11. The hot air assembly is capable of generating hot air and blowing it toward food placed in the inner pot 121 to airfry the food. As shown in Figures 2 and 3, the hot air assembly in this embodiment comprises a fan 113 driven to rotate by an electric motor 111 and a first heating element 114 arranged below the fan 113. The first heating element can be any element capable of generating heat, such as a heating disk, an electromagnetic wire disk, and is preferably a planar spiral heating tube. A second heating element 124 for heating the bottom wall of the inner pot 121 is further provided in a base of the utensil body 12. In the present embodiment, the cover assembly 11 is pivotally hinged to the utensil body 12 and is capable of moving between an open position and a closed position. When the cover assembly 11 is in the closed position, it can be rotated to achieve a sealed locking or unlocking between the cover assembly and the utensil body by engagement or disengagement between a plurality of spaced pot teeth arranged at a mouth of a heat preservation cover and corresponding cover teeth on the cover assembly. It should be understood that the cover assembly 11 can also be removably connected to the utensil body 12. That is, it can sealingly cover the utensil body 12 when in use, and can be conveniently removed from the utensil body 12 when not in use. It should also be understood that the cover assembly 11 can be configured to sealingly cover the utensil body 12 without the need for rotation. Those skilled in the art know a variety of structural arrangements that can achieve the above purpose, which therefore are not described here.

The multifunctional cooking utensil 10 according to the embodiments of the present application further comprises a controller 131 signal connected to the first heating element 114, the second heating element 124, and the fan 113. In the above embodiment, as shown in Figure 1, the controller 131 is arranged on the utensil body 12, behind a human-machine interaction panel 13. However, it should be understood that the human-machine interaction panel 13 and the controller 131 may be arranged in any other suitable position, such as on the cover. The human-machine interaction panel 13 can be provided with various devices, such as buttons, knobs, display screens, for a user to perform operations such as menu selection, parameter setting, information reading. In some embodiments, for the convenience of the user, a plurality of preset recipes can be provided on the human-machine interaction panel 13, such as French fries, baked sweet potatoes, baked fish, etc., which only require convection cooking; chicken soup, beef stew, stewed pig's trotters, etc., which only require conduction cooking; and, steam-baked whole chicken, steam-baked chicken wings, and three-layer dishes (i.e., cooking food ingredients of different properties and tastes on different layers by means of a food support 14 placed in the inner pot 121, for example, cooking porridge or soup in the space 143 below the food support, steaming vegetables (such as potatoes, carrots, yams, corn, etc.) on the bottom layer 142 of the food support, and air-frying meat (such as chicken, beef, mutton, etc.) on the top layer 141 of the food support, as shown in Figure 3), which require combined cooking. Of course, due to the limited space on the human-machine interaction panel, only a few most popular and common recipes can be provided on the panel according to results of a preliminary customer survey, and an input device can be provided to allow the user to input personalized parameters (such as cooking time, temperature, etc.). The controller 131 is configured to enable the multifunctional cooking utensil 10 to operate in a plurality of modes including a conduction cooking mode, a convection cooking mode, and a combined cooking mode. In the conduction cooking mode, the controller 131 causes the second heating element 124 to operate while the first heating element 114 and the fan 113 do not operate. In the convection cooking mode, the controller 131 causes the first heating element 114 and the fan 113 to operate while the second heating element 124 does not operate. In the present application, "convection cooking mode" includes any cooking mode that produces a dry cooking environment in the cooking space, such as but not limited to, air frying, baking, grilling, and dehydrating; "conduction cooking mode" includes any cooking mode that produces a moist cooking environment in the cooking space, such as but not limited to, pressure cooking, steam cooking, and slow stewing; "combined cooking mode" includes any combination of a convection cooking mode and a conduction cooking mode, such as but not limited to, steaming then baking mode (referred to as steam baking mode) and pressure cooking then air frying mode. Among them, the steam baking mode is becoming more and more popular due to its unique advantages in cooking meat typed food.

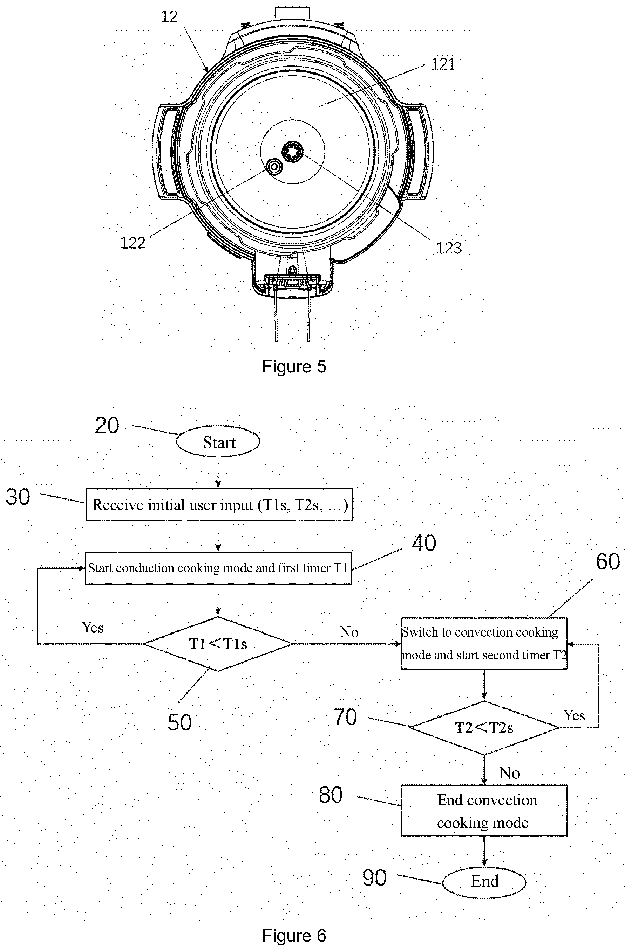

The control logic of the controller 131 of the multifunctional cooking utensil 10 according to embodiments of the present application in the combined cooking mode is described in detail below in reference to Figure 6.

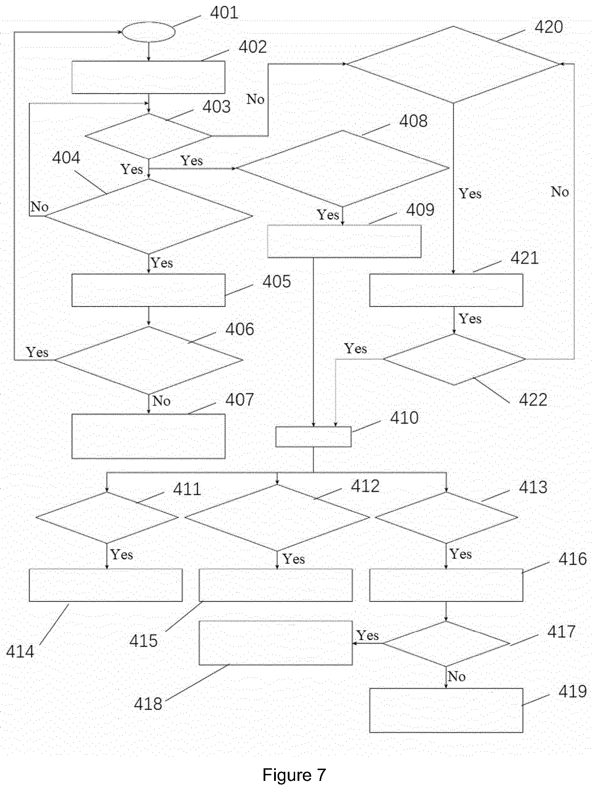

The control logic starts at step 20. Next, in step 30, the controller 131 receives an initial user input intended to initiate the combined cooking mode. The initial user input includes a conduction cooking mode duration T1s (e.g., 15 to 20 minutes) and a convection cooking mode duration T2s (e.g., 15 to 120 minutes). In some embodiments, the human-machine interaction panel 13 provides a plurality of preset recipes that need combined cooking, each of which is associated with corresponding preset values of T1s and T2s (e.g., see the exemplary recipe list mentioned below). The user provides the initial user input by selecting a preset recipe. In some embodiments, the user can manually set the values of cooking parameters (such as conduction cooking mode duration T1s, convection cooking mode duration T2s, cooking temperature, etc.) on the human-machine interaction panel 13 to provide the initial user input. Then, in step 40, the controller 131 starts the conduction cooking mode and a first timer (not shown). The control logic in the conduction cooking mode will be described in detail below in reference to Figure 7. In step 50, the controller 131 determines whether the time T1 recorded by the first timer is less than T1s. If yes, the cooking utensil 10 continues to operate in the conduction cooking mode, and the first timer continues to work. If not, the process proceeds to step 60. In step 60, the controller 131 switches the cooking utensil 10 to the convection cooking mode (i.e., turns off the second heating element 124 and starts the first heating element 114 and the fan 113) and starts the second timer. Next, in step 70, the controller 131 determines whether the time T2 recorded by the second timer is less than T2s. If yes, the cooking utensil 10 continues to operate in the convection cooking mode, and the second timer continues to work. If not, the process proceeds to step 80. In step 80, the controller 131 stops the convection cooking mode to end the entire cooking process. Then, the control logic ends at step 90.

As can be seen from the above description, in the above control logic, the controller 131 does not determine whether to switch the conduction cooking mode to the convection cooking mode based on the temperature detected by a sensor as in the prior art, but based on the time recorded by the first timer. When the time T1 reaches the preset duration T1s, the cooking utensil 10 is switched to the convection cooking mode. In this way, it can be ensured that the switch is not made prematurely due to misjudgment, so that food is cooked in the conduction cooking mode for sufficient time (for example, when the conduction cooking mode is steam cooking, it can be ensured that sufficient steam is generated), and finally an ideal expected cooking effect is achieved. Similarly, the controller 131 determines whether to end the cooking based on the time recorded by the second timer. When the time T2 reaches the preset duration T2s, the convection cooking mode is ended. In this way, it can be ensured that the food is cooked in the convection cooking mode for sufficient time to obtain an ideal taste.

Advantageously, at time t2 (e.g., 2 to 5 minutes) before the convection cooking mode ends, that is, when the time T2 recorded by the second timer is equal to T2s-t2, the controller 131 causes the first heating element 114 at the top of the cooking space to stop operating, while the fan 113 continues to operate for a duration of t2. That is, when the time T2 recorded by the second timer is equal to T2s, it causes the fan to stop operating as well. In this way, during time t2, flowing air generated by the fan 113 can cool down the first heating element 114 and accelerate its cooling process, so that the temperature of the first heating element 114 has dropped to near room temperature at the end of cooking, thereby reducing the risk of scalding the user who opens the cover to retrieve food.

In the embodiment shown in Figures 2 and 3, the multifunctional cooking utensil 10 further comprises a first temperature sensor 112 and a second temperature sensor 122, wherein the first temperature sensor 112 is arranged in the cover assembly 11 and is signal-connected to the controller 131, and the second temperature sensor 122 is conductively connected to the bottom wall of the inner pot 121 and is signal-connected to the controller 131. The first temperature sensor 112 is configured to measure the temperature of the top of the cooking space in real time during both the conduction cooking mode and the convection cooking mode and can send the temperature to the controller 131 in real time, while the second temperature sensor 122 is configured to measure the temperature of the bottom wall of the inner pot 121 in real time during both the conduction cooking mode and the convection cooking mode and can send the temperature to the controller 131 in real time. The first temperature sensor 112 and the second temperature sensor 122 can both be thermistor sensors, preferably negative temperature coefficient sensors, which are low-cost and widely used. The temperature measurement range of the first temperature sensor 112 can be, for example, -40°C to 300°C, and that of the second temperature sensor 122 can be, for example, -50°C to 350°C. Such temperature measurement ranges can basically cover the temperatures that may occur in various cooking modes. Advantageously, as shown in Figures 2 to 4, at least a portion of the first temperature sensor 112 is exposed in the cooking space and away from the first heating element 114, so that the temperature of the air/steam at the top of the cooking space can be measured as accurately as possible. In the embodiment shown in Figures 2 and 5, the second temperature sensor 122 is located near the center of the bottom wall of the inner pot 121. In an embodiment in which the cooking utensil does not comprise a stirring blade base, the second temperature sensor 122 is preferably located at the center of the bottom wall of the inner pot 121. With the second temperature sensor 122 located at or near the center of the bottom wall, it can more accurately measure the temperature of the bottom wall of the inner pot, making the control more precise and reliable.

The control logic of the controller 131 in the conduction cooking mode will be described in detail below in reference to Figure 7, taking the steam cooking mode as an example.

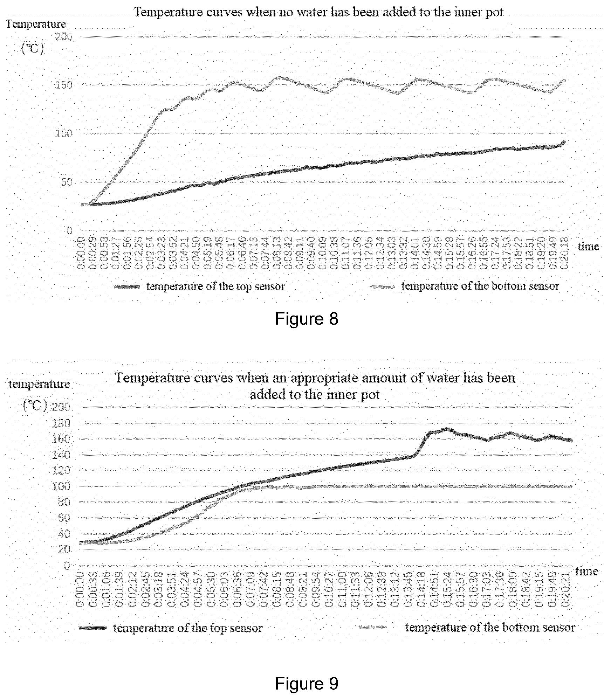

The control logic starts at step 401. Next, in step 402, the controller 131 starts the conduction cooking mode and cause the second heating element 124 to operate at full power (e.g., 1,000 to 1,100 W), while starting the first timer at the same time. Next, in step 403, the controller 131 determines whether the time T1 recorded by the first timer is less than or equal to a first time threshold (i.e., the time required to generate steam under normal conditions, for example, 5 to 8 minutes). If yes, the process proceeds to step 404 and step 408; if not, the process proceeds to step 420. In step 404, the controller 131 determines whether the temperature value TopTemp of the top of the cooking space received from the first temperature sensor 112 is lower than a first temperature threshold (for example, 80°C to 92°C) and whether the temperature value BotTemp of the bottom wall of the inner pot 121 received from the second temperature sensor 122 is higher than a second temperature threshold (which is equal to a protection temperature against dry burning set by the system minus 15°C, for example, 130°C to 145°C). If yes (meaning that the temperature at the top of the cooking space rises slowly and has not yet reached the temperature that the steam should have, while the temperature of the bottom wall of the inner pot rises quickly and is close to the protection temperature against dry burning, which indicates that no steam has been generated in the inner pot and that the user has forgotten to add water), then the process proceeds to step 405; if no, then the process returns to step 403. In step 405, the controller 131 causes the second heating element 124 to stop operating and activates a water shortage alarm device and a third timer. Next, in step 406, the controller 131 determines whether the user has added water (for example, whether a signal for restarting by the user is received) and whether the time T3 recorded by the third timer is less than or equal to a third time threshold (i.e., the time for waiting for the user to add water, for example, 1 to 2 minutes). If yes, the process returns to step 401 and conduction cooking is restarted. If no, the process proceeds to step 407. In step 407, the controller 131 causes the second heating element 124 to operate intermittently at a second power (e.g., 800 to 900 W), which is lower than the full power, so that the temperature value BotTemp of the bottom wall of the inner pot is maintained around a second temperature threshold, until the time T1 recorded by the first timer is equal to T1s, at which time the process proceeds to step 60, that is, switches to the convection cooking mode. This means that if the user forgets to add water to the inner pot and still does not add water after being reminded, the second heating element 124 will operate intermittently at the lower second power, so that the temperature of the bottom wall of the inner pot is always lower than the protection temperature against dry burning (so the inner pot will not be damaged due to overheating), until the ending of T1s and switching to the convection cooking mode. Thus, although food is not steam-cooked first and then baked/air-fried as expected, the temperature of the food in the pot is maintained during the conduction cooking stage, which reduces preheating time for subsequent convection cooking, and cooked food can still be obtained at the end of the entire cooking process. Of course, when the determination result of step 406 is no, the process can return to step 405, issue a water shortage reminder to the user again, and repeat this process, until the user adds water and confirms restarting. It is also possible to directly end cooking when the determination result of step 406 is no. Figure 8 shows temperature curves of the first temperature sensor (top temperature sensor) and the second temperature sensor (bottom temperature sensor) when no water has been added to the inner pot according to an embodiment of the present application.

In step 408, the controller 131 determines whether the temperature value TopTemp of the top of the cooking space received from the first temperature sensor 112 is higher than the first temperature threshold and whether the temperature value BotTemp of the bottom wall of the inner pot received from the second temperature sensor 122 is lower than the second temperature threshold and greater than a third temperature threshold (for example, 100°C). If yes (which means that the temperature of the top of the cooking space rises quickly and is about to reach the temperature that the steam should have, while the temperature of the bottom wall of the inner pot rises slowly and is still far from the protection temperature against dry burning, which indicates that the user has added an appropriate amount of water and steam has been generated in the inner pot), then the process proceeds to step 409. In step 409, the controller 131 lets the second heating element 124 to continue to operate at full power and at the same time starts a fourth timer in step 410 (for recording the steam duration, i.e., the duration from the generation of steam to the end of steam). Next, the process proceeds to steps 411, 412 and 413 respectively. In step 411, the controller 131 determines whether the temperature value BotTemp of the bottom wall of the inner pot received from the second temperature sensor 122 is lower than the second temperature threshold. If yes, the second heating element 124 is made to operate alternately at full power and the second power according to a second cycle (for example, the second cycle is 3 to 5 minutes, wherein the second heating element operates at full power for 2 to 3 minutes and operates at the second power for 1 to 2 minutes). This prevents the temperature from rising too quickly, causing damages to the components. In step 412, the controller 131 determines whether the temperature value BotTemp of the bottom wall of the inner pot received from the second temperature sensor 122 is higher than the second temperature threshold and lower than a fourth temperature threshold (i.e., the protection temperature against dry burning, for example, 145°C to 160°C). If yes, the second heating element 124 is made to operate at the second power. In step 413, the controller 131 determines whether the temperature value BotTemp of the bottom wall of the inner pot received from the second temperature sensor 122 is higher than the fourth temperature threshold. If yes, the second heating element 124 is made to stop operating and the time T4 recorded by the fourth timer is read. Although Figure 7 shows in a simplified way that steps 411, 412, and 413 are parallel, it should be understood that as the temperature of the bottom wall of the inner pot gradually rises, the conditions listed in steps 411, 412, and 413 will be met in sequence. Therefore, steps 414, 415, and 416 will be executed in sequence. After step 416, step 417 is executed. In step 417, the controller 131 determines whether the time T4 recorded by the fourth timer is greater than or equal to a fourth time threshold (i.e., the ideal steam duration corresponding to a selected recipe, for example, 8 minutes to 15 minutes). If yes (which means that the actual steam duration is sufficient and the amount of water in the pot is normal), when the bottom wall of the inner pot naturally cools down to a temperature value BotTemp lower than the fourth temperature threshold, the second heating element 124 is made to operate at a third power (e.g., 600 to 650 W), which is lower than the second power, until the time T1 recorded by the first timer is equal to T1s, at which time it switches to the convection cooking mode; if no (meaning that the actual steam duration is too short and the amount of water in the pot is too little), when the bottom wall of the inner pot cools down to a temperature value BotTemp lower than the fourth temperature threshold, the second heating element 124 is made to operate at a fourth power (e.g., 500 to 550w), which is lower than the third power, until the time T1 recorded by the first timer is equal to T1s, at which time it switches to the convection cooking mode. Figure 9 shows temperature curves of the first temperature sensor (top temperature sensor) and the second temperature sensor (bottom temperature sensor) when a proper amount of water has been added to the inner pot according to an embodiment of the present application.

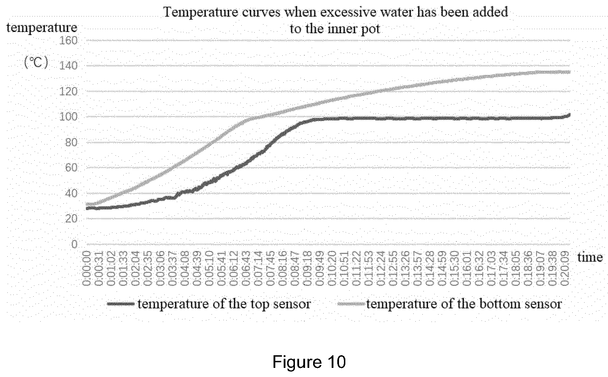

In step 420, the controller 131 determines whether the temperature value TopTemp of the top of the cooking space received from the first temperature sensor 112 is lower than the first temperature threshold and whether the temperature value BotTemp of the bottom wall of the inner pot received from the second temperature sensor 122 is lower than the second temperature threshold and higher than the third temperature threshold. If yes (which means that the temperature at the top of the cooking space rises slowly and has not yet reached the temperature that the steam should have, and the temperature of the bottom wall of the inner pot also rises slowly and is still far from the protection temperature against dry burning, which indicates that the user has added too much water and steam has not yet been generated), then the process proceeds to step 421. In step 421, the controller 131 causes the second heating element 124 to operate alternately at full power and the second power, which is lower than full power, according to a first cycle (for example, the first cycle is 4 to 7 minutes, wherein the second heating element operates at full power for 3 to 5 minutes and operates at the second power for 1 to 2 minutes). This prevents the temperature from rising too quickly, causing damages to the components. Next, in step 422, the controller 131 determines whether the temperature value TopTemp of the top of the cooking space received from the first temperature sensor 112 is higher than the first temperature threshold. If yes (which means that steam has been generated), the process proceeds to step 410. If not, the process returns to step 420. Figure 10 shows temperature curves of the first temperature sensor (top temperature sensor) and the second temperature sensor (bottom temperature sensor) when excessive water has been added to the inner pot according to an embodiment of the present application.

In an exemplary embodiment, the full power is 1,100w, the second power is 900w, the third power is 650w, the fourth power is 550w, T1s is 20 minutes, the first time threshold is 6 minutes, the third time threshold is 1 minute, the fourth time threshold is 10 minutes, the first temperature threshold is 90°C, the second temperature threshold is 145°C, the third temperature threshold is 100°C, the fourth temperature threshold is 160°C, the first cycle is 5 minutes, and the second cycle is 4 minutes.

From the above description, it can be seen that in the above control logic, the controller 131 can determine whether water has been added to the inner pot and whether the water is excessive based on the temperature value TopTemp of the top of the cooking space received from the first temperature sensor 112 and the temperature value BotTemp of the bottom wall of the inner pot received from the second temperature sensor 122, and cause the second heating element 124 to operate in different ways according to different situations, so as to achieve a good conduction cooking effect while ensuring that dry burning does not occur.

The control logic of the controller 131 in the convection cooking mode is briefly described below. The initial user input received by the controller 131 to initiate the combined cooking mode also includes an ideal baking temperature (i.e., a set temperature, for example, 180 to 200°C) for the convection cooking stage, which is the temperature that needs to be reached at the geometric center of the inner pot. Due to the position where the first temperature sensor 112 is mounted and the convection effect of the fan 113, the temperature value measured by the first temperature sensor 112 is usually lower than the temperature at the center of the inner pot at the same moment. Therefore, it is necessary to find the corresponding relationship between the two based on actual tests, and output the corresponding relationship between the set temperature and a temperature control point (i.e., the temperature value measured by the first temperature sensor 112). For example, when the set temperature is 200°C, the corresponding temperature control point is 170°C.

In the convection cooking mode, the second heating element 124 is in an off state, and the controller 131 causes the first heating element 114 to operate intermittently periodically, that is, to immediately start to operate when the temperature value TopTemp at the top of the cooking space received from the first temperature sensor 112 drops below a first temperature control threshold On_var, and to immediately stop operating when TopTemp rises above a second temperature control threshold Off_var, wherein Off_var is higher than or equal to On_var. The initial value of On_var is equal to the temperature control point, and the initial value of Off_var is equal to the temperature control point + a fluctuation amplitude, wherein the fluctuation amplitude ranges from 0 to 3°C. The operation of the first heating element 114 from start-up to shutdown is recorded as one heating cycle, and the number of heating cycles N is recorded. According to some embodiments, when the number of cycles N < 3: Off_var = Off_var + 2, On_var = On_var + 2 (the pot has not reached thermal equilibrium in the early stage, and the temperature control point needs to be increased so that the temperature in the preheating stage quickly reaches above the set temperature); when the number of cycles is such that 3<N<7: Off_var = Off_var + 1, On_var = On_var + 1; when the number of cycles is such that 7<N<10: Off_var = Off_var, On_var = On_var; when the number of cycles is such that 10<N<20: Off_var = Off_var - 1, On_var = On_var - 1; when the number of cycles is such that 20<N<45: Off_var = Off_var - 2, On_var = On_var - 2; when the number of cycles is such that 45<N<60: Off_var = Off_var - 3, On_var = On_var - 3; when the number of cycles is such that N>60: Off_var = Off_var - 4, On_var = On_var - 4. When the temperature value TopTemp of the top of the cooking space detected by the first temperature sensor 112 is much lower than the set temperature (for example, 15°C lower), which means that the equilibrium temperature in the pot is broken (for example, after the cover is opened in the middle of the cooking process), the number of cycles N is reset and counted again. In the above control logic, the temperature control point is automatically adjusted through the heating cycle (that is, after several heating cycles, the temperature control point gradually decreases), so that the convection cooking temperature in the pot is stable.

Advantageously, in the convection cooking mode, when the temperature value BotTemp of the bottom wall of the inner pot received from the second temperature sensor 122 is higher than a safety temperature threshold (e.g., 160 to 200°C.), the first heating element 114 is made to stop operating In this way, even if the first temperature sensor 112 fails, heating can be stopped in time when the temperature in the pot is too high, thereby ensuring the safety of the user and reducing the risk of damage to components of the cooking utensil due to overheating.

The following table exemplarily shows some preset recipes and their corresponding parameters when the inner pot's capacity is 8L, the full power is 1,100W, the second power is 900W, the third power is 650W, and the fourth power is 550W.

| Recipe | T1s (conduction cooking duration) | Fourth time threshold (steam duration) | T2s (convection cooking duration) | Temperature set for baking |
|---|---|---|---|---|
| Steam baking baby chicken (about 500g) | 15min | 9min | 30min | 200°C |
| Steam baking whole chicken (about 1kg) | 20min | 14min | 40min | 200°C |
| Steam baking chicken wings (about 500g) | 15min | 9min | 25min | 180°C |
| Steam baking chicken wings (about 1kg) | 20min | 14min | 35min | 180°C |
| Three-layered food (porridge/soup at bottom layer- vegetables at middle layer-meat at top layer) | 20min | 14min | 20min | 200°C |

It should be understood that other recipes can be provided or the parameters in the above table can be adjusted according to actual needs.

Unless otherwise defined, the technical and scientific terms used herein have the same meanings as those generally understood by those skilled in the art of the present application. The terms used in the present application are for the purpose of describing specific modes of realization only and are not intended to limit the present invention. The singular forms of "a", "an" and "the" used in the present application are intended to also include plural forms unless the context clearly indicates otherwise. It should also be understood that the term "and/or" as may be used herein refers to and includes any or all possible combinations of one or more associated listed items. It should be understood that "first", "second" and similar words used in the specification of the present application do not indicate any order, quantity or importance, but are only used to distinguish different components. "Plurality" or "several" etc. means two or more in quantity.

The above are only preferred modes of realization of the present invention and are not intended to limit the present invention. Any modifications, equivalent substitutions, improvements, etc. made within the spirit and principles of the present invention shall fall within the scope of protection of the present application.

## Claims

1. A multifunctional cooking utensil (10) comprising:
a housing defining a hollow chamber;
an inner pot (121) removably arranged in the hollow chamber and comprising a side wall and a bottom wall;
a cover assembly (11) configured to cover the housing and defining a cooking space together with the inner pot (121);
a hot air assembly arranged in the cover assembly (11) and comprising a fan (113) and a first heating element (114);
a second heating element (124) arranged in a base of the housing and used for heating the bottom wall of the inner pot (121);
**characterized in that** the multifunctional cooking utensil (10) further comprises a first timer and a controller (131) configured to enable the multifunctional cooking utensil (10) to operate in a plurality of modes comprising a conduction cooking mode in which the second heating element (124) operates while the first heating element (114) and the fan (113) do not operate, a convection cooking mode in which the first heating element (114) and the fan (113) operate while the second heating element (124) does not operate, and a combined cooking mode;
wherein the controller (131) is configured to execute the following steps:
S1: receiving an initial user input for initiating the combined cooking mode, the initial user input comprising a conduction cooking mode duration T1s and a convection cooking mode duration T2s;
S2: starting the convection cooking mode and the first timer;
S3: when a time T1 recorded by the first timer is equal to T1s, switching to the convection cooking mode and starting a second timer;
S4: when a time T2 recorded by the second timer is equal to T2s, ending cooking.

2. The multifunctional cooking utensil according to claim 1, wherein step S4 comprises:
S41: when the time T2 recorded by the second timer is equal to T2s-t2, causing the first heating element (114) to stop operating while letting the fan (113) continue to operate;
S42: when the time T2 recorded by the second timer is equal to T2s, causing the fan (113) to stop operating as well.

3. The multifunctional cooking utensil according to claim 1 or claim 2, further comprising:
a first temperature sensor (112) arranged in the cover assembly (11) and configured to measure the temperature of the top of the cooking space in real time during both the conduction cooking mode and the convection cooking mode and to send the temperature to the controller (131) in real time; and
a second temperature sensor (122) conductively connected to the bottom wall of the inner pot (121) and configured to measure the temperature of the bottom wall of the inner pot (121) in real time during both the conduction cooking mode and the convection cooking mode and to send the temperature to the controller (131) in real time.

4. The multifunctional cooking utensil according to claim 3, further comprising a human-machine interaction panel (13) signal-connected to the controller (131), a user providing the initial user input by selecting a preset recipe on the human-machine interaction panel (13), the preset recipe being associated with corresponding preset values of T1s and T2s.

5. The multifunctional cooking utensil according to claim 3, further comprising a human-machine interaction panel (13) signal-connected to the controller (131), a user providing the initial user input by manually inputting values of T1s and T2s on the human-machine interaction panel (13).

6. The multifunctional cooking utensil according to any one of claims 3 to 5, wherein the first temperature sensor (112) and the second temperature sensor (122) are both thermistor sensors, preferably negative temperature coefficient sensors.

7. The multifunctional cooking utensil according to claim 6, wherein the first temperature sensor (112) has a temperature measuring range of -40°C to 300°C, and the second temperature sensor (122) has a temperature measuring range of -50°C to 350°C.

8. The multifunctional cooking utensil according to any one of claims 3 to 7, wherein at least a portion of the first temperature sensor (112) is exposed in the cooking space and away from the first heating element (114), and the second temperature sensor (122) is located at or near a center of the bottom wall of the inner pot (121).

9. The multifunctional cooking utensil according to any one of claims 3 to 8, wherein step S2 comprises the following step:
S21: causing the second heating element (124) to operate at full power when starting the conduction cooking mode; and causing the second heating element (124) to stop operating and activating a water shortage alarm device and a third timer when the time T1 recorded by the first timer is less than or equal to a first time threshold, if the temperature value TopTemp of the top of the cooking space received from the first temperature sensor (112) is lower than a first temperature threshold and the temperature value BotTemp of the bottom wall of the inner pot (121) received from the second temperature sensor (122) is higher than a second temperature threshold.

10. The multifunctional cooking utensil according to claim 9, wherein, step S2 further comprises the following step:
S22: causing the second heating element (124) to operate at full power when starting the conduction cooking mode; and letting the second heating element (124) continue to operate at full power and starting a fourth timer when the time T1 recorded by the first timer is less than or equal to the first time threshold, if the temperature value TopTemp of the top of the cooking space received from the first temperature sensor (112) is higher than the first temperature threshold and the temperature value BotTemp of the bottom wall of the inner pot (121) received from the second temperature sensor (122) is lower than the second temperature threshold and higher than a third temperature threshold.

11. The multifunctional cooking utensil according to claim 10, wherein step S2 further comprises the following step:
S23: causing the second heating element (124) to operate at full power when starting the conduction cooking mode; causing the second heating element (124) to alternate between operating at full power and operating at a second power, which is lower than the full power, according to a first cycle, when the time T1 recorded by the first timer is greater than the first time threshold, if the temperature value TopTemp of the top of the cooking space received from the first temperature sensor (112) is lower than the first temperature threshold and the temperature value BotTemp of the bottom wall of the inner pot (121) received from the second temperature sensor (122) is lower than the second temperature threshold and higher than the third temperature threshold; and starting a fourth timer when TopTemp is higher than the first temperature threshold.

12. The multifunctional cooking utensil according to any one of claims 9 to 11, wherein after step S21, the following steps are further comprised:
S211: if the controller (131) determines that a user has added water and a time T3 recorded by the third timer is less than or equal to a third time threshold, repeating steps S2, S3 and S4;
S212: if the controller (131) determines that a user has not added water and the time T3 recorded by the third timer is greater than the third time threshold, causing the second heating element (124) to operate intermittently at the second power, which is lower than the full power, so that the temperature value BotTemp of the bottom wall of the inner pot (121) is maintained around the second temperature threshold until the time T1 recorded by the first timer is equal to T1s.

13. The multifunctional cooking utensil according to claim 10 or 11, wherein after step S22 or S23, the following steps are further comprised:
S24: if the temperature value BotTemp of the bottom wall of the inner pot (121) received from the second temperature sensor (122) is lower than the second temperature threshold, causing the second heating element (124) to alternate between operating at full power and operating at the second power according to a second cycle;
S25: if the temperature value BotTemp of the bottom wall of the inner pot (121) received from the second temperature sensor (122) is higher than the second temperature threshold and lower than a fourth temperature threshold, causing the second heating element (124) to operate at the second power;
S26: if the temperature value BotTemp of the bottom wall of the inner pot (121) received from the second temperature sensor (122) is higher than the fourth temperature threshold, causing the second heating element (124) to stop operating and reading the time recorded by the fourth timer.

14. The multifunctional cooking utensil according to claim 13, wherein after step S26, the following steps are further comprised:
S261: if the time T4 recorded by the fourth timer is greater than or equal to a fourth time threshold, when the bottom wall of the inner pot (121) cools down to a temperature value BotTemp lower than the fourth temperature threshold, causing the second heating element (124) to operate at a third power, which is lower than the second power;
S262: if the time T4 recorded by the fourth timer is less than the fourth time threshold, when the bottom wall of the inner pot (121) cools down to a temperature value BotTemp lower than the fourth temperature threshold, causing the second heating element (124) to operate at a fourth power, which is lower than the third power.

15. The multifunctional cooking utensil according to any one of claims 3 to 14, wherein the controller (131) is configured to:
in the convection cooking mode, cause the first heating element (114) to operate intermittently periodically, that is, to immediately start to operate when the temperature value TopTemp of the top of the cooking space received from the first temperature sensor (112) drops below a first temperature control threshold, and to immediately stop operating when TopTemp rises above a second temperature control threshold.

16. The multifunctional cooking utensil according to any one of claims 3 to 15, wherein the controller (131) is configured to:
in the convection cooking mode, when the temperature value BotTemp of the bottom wall of the inner pot (121) received from the second temperature sensor (122) is greater than a safety temperature threshold, cause the first heating element (114) to stop operating.
